# NEUE EUROPÄISCHE PATENTSCHRIFT

(11) **EP 2 363 599 B2**
(45) Veröffentlichungstag und Bekanntmachung des Hinweises auf die Entscheidung über den Einspruch: **16.03.2022**
(45) Hinweis auf die Patenterteilung: 18.03.2015
(21) Anmeldenummer: 11152375.9
(22) Anmeldetag: 27.01.2011
(51) Int. Cl.: F03D 1/06

(54) **Rotorblatt für eine Windenergieanlage, Windenergieanlage und Verfahren zum Herstellen eines Rotorblatts**
Rotor blade for a wind turbine, wind turbine and method for manufacturing a rotor blade
Pale de rotor pour une éolienne, éolienne et procédé de fabrication d'une pale de rotor

(30) Priorität: 26.02.2010 DE 102010002432
(43) Veröffentlichungstag der Anmeldung: 07.09.2011
(73) Patentinhaber: Siemens Gamesa Renewable Energy Service GmbH, 20097 Hamburg (DE)
(72) Erfinder: Bendel, Urs, 24787 Fockbek (DE); Eyb, Enno, 24116 Kiel (DE)
(74) Vertreter: Wallinger Ricker Schlotter Tostmann

(56) Entgegenhaltungen:
- CN-A- 101 539 116
- DE-A1- 19 534 627
- DE-A1-102006 034 828
- DE-A1-102007 056 930
- DE-A1-102008 007 304
- DE-A1-102009 003 421
- US-A- 4 976 587
- US-A1- 2007 025 859
- US-A1- 2008 181 781
- US-A1- 2009 196 756
- DAYTON A. GRIFFIN: "Blade System Design Studies Volume II: Preliminary Blade Designs and Recommended Test Matrix, SAND2004-0073", SANDIA National Laboratories, June 2004 (2004-06), pages 1-79,
- GE Energy: "Rotorblade Manufacturing and Testing", , 29 December 2009 (2009-12-29),
- Wetzel Kyle K.: "AIAA 2009-2409: Defect- Tolerant Structural Design of Wind Turbine Blades", 50th AIAA/ASME/ASCBAHS/ASC, Structures Structural Dynamics and Materials Conference 2009, vol. 6, 1 July 2009 (2009-07-01),
- Wetzel et al: "The WEI6K. a 6-kW 7-m Small Wind Turbine. Final Technical Report DOE/GO/13136-1", ,
- Tpi Composites, Inc.: "Cost Study for Large Wind Turbine Blades: WindPACT Blade System Design Studies, SAND2003-1428", SANDIA National Laboratories, May 2003 (2003-05), pages 1-38,
- Tpi Composites, Inc.: "Parametric Study for Large Wind Turbine Blades: WindPACT Blade System Design Studies, SAND2002-2519", SANDIA National Laboratories, August 2002 (2002-08), pages 1-43,
- DAYTON A. GRIFFIN: "WindPACT Turbine Design Scaling Studies Technical Area I-Composite Blades for 80- to 120-Meter Rotor, NREL/SR-500-29492", National Renewable Energy Laboratory, April 2001 (2001-04), pages 1-44,
- R. NIJSSEN et al: "WMC5 MW laminate lay-out of reference blade for WP 3", Project UpWind, 22 May 2007 (2007-05-22), pages 1-7,
- FEDERICO GHEDIN: "Structural Design of a 5 MW Wind Turbine Blade Equipped With Boundary Layer Suction Technology", MASTER OF SCIENCE THESIS For obtaining the degree of Master of Science in Sustainable Energy Technology at Eindhoven University of Technology, 23 September 2010 (2010-09-23), pages 1-100,
- BÖHNISCH et al.Hermann Hald, Christoph Kensche, Alfred Kussmann, Jens-Peter Molly und Henry Seifert: "Entwicklung, Bau und Betrieb einer 30/100-kW-Windkraftanlage", Deutsche Forschungs- und Versuchsanstalt für Luft- und Raumfahrt, April 1988 (1988-04), page 1-3,14-41, Stuttgart
- "Wikipedia Eintrag: 'Gelege'", Wikipedia, 8 February 2010 (2010-02-08),
- Norm BS EN 13473-1:2001
- Design, Manufacturing and Application of Composites
- Lehrbuch 'Konstruieren mit Faser-Kunststoff-Verbunden'
- 'Windkraftanlagen: Grundlagen, Technik, Einsatz, Wirtschaftlichkeit' (Hau)
- 'Dimensionieren mit Faserverbundwerkstoffen' 1994

## Beschreibung

Die Erfindung betrifft ein Rotorblatt für eine Windenergieanlage, das sich von einer Rotorblattwurzel im Wesentlichen zu einer Rotorblattspitze erstreckt, umfassend eine ein- oder mehrteilige Schale, die wenigstens teilweise aus einem Faserverbundwerkstoff hergestellt ist, und wenigstens einen Gurt, der im Rotorblatt im Wesentlichen in Richtung einer Längserstreckung des Rotorblatts angeordnet ist, wobei der wenigstens eine Gurt Lagen aus einem Faserverbundwerkstoff mit unidirektional in Richtung einer Längserstreckung des Gurtes ausgerichteten Fasern aufweist. Die Erfindung betrifft weiter eine Windenergieanlage sowie ein Verfahren zum Herstellen eines Rotorblatts für eine Windenergieanlage.

Üblicherweise werden Rotorblätter für Windenergieanlagen in zwei Schalen gebaut, nämlich einer Schale für eine Saugseite des Rotorblatts und einer Schale für eine Druckseite des Rotorblatts. Die Halbschalen werden anschließend zusammengefügt und verklebt.

Die Schalen von Rotorblättern basieren üblicherweise wenigstens teilweise auf Faserverbundwerkstoffen. Hierzu werden in einer möglichen Bauweise mehrere Lagen dünner Fasergelege verwendet. Diese können zunächst trocken in eine Form eingelegt werden und anschließend mittels einer Harzinfusionstechnik mit einem Harz versehen werden. Alternativ können so genannte "Prepregs" (von "Pre-impregnated Fibers"), also vorimprägnierte Fasern verwendet werden. Hierbei handelt es sich um flaches Halbzeug, bei dem die Fasern bereits in eine Lage aus Harz eingebettet sind. Nach dem Aufbau der Schale aus Prepregs wird die Schale mit einem Unterdruck beaufschlagt und erwärmt, so dass das Harz der Prepreg-Lagen sich zu einer stoffschlüssigen Harzmasse vereinigt.

Üblicherweise werden für die Schalen Gelege unterschiedlich orientierter Fasern verwendet. Die Faserorientierung in den Lagen, die für den Schalenaufbau verwendet werden, ist üblicherweise ±45°, also zum Teil +45° und zum anderen Teil -45°, zur Längsachse des Rotorblatts. Solche Fasergelege werden auch als "2AX45"-Lagen bezeichnet.

Wenn im Rahmen der vorliegenden Erfindung von Gradzahlen wie 0° oder 45° die Rede ist, so ist darin sowohl in der Beschreibung des Standes der Technik als auch in der Beschreibung der Erfindung jeweils eingeschlossen, dass fertigungsspezifische Toleranzen und Abweichungen von einer genauen 0°-Lage oder 45°-Lage innerhalb weniger Grad vorkommen und von der Erfindung mit umfasst sind. Übliche Fertigungstoleranzen sind lokal bis zu 2° bis 5°.

Die Faserverbundmaterialien weisen wegen der darin eingebetteten Glasfasern, Kohlefasern oder Kunststofffasern eine hohe Zugfestigkeit in der Richtung der Faserorientierung auf. Die Verwendung "2AX45"-Lagen für die Schale eines Rotorblatts hat daher zur Folge, dass die Schale eine vergleichsweise geringe Steifigkeit gegenüber Belastungen in Schlagrichtung aufweist. Damit ist die Schale nachgiebig beispielsweise gegenüber Windböen, mit denen das Rotorblatt aus der Rotorblattebene heraus ausgelenkt wird. Dabei verbiegt sich das Rotorblatt bevorzugt in einer Richtung senkrecht zu einer Ebene, die zwischen der Vorderkante und der Hinterkante des Rotorblattprofils angeordnet ist. In einem Profilquerschnitt des Rotorblatts wird diese Ebene auch als "Sehne" bezeichnet.

Um diese Kräfte aufzunehmen, weisen die Schalen Gurte auf, die in einer Längsrichtung des Rotorblatts verlaufen, siehe z.B. DE 10 2007 056 930. Diese sorgen insbesondere für eine Biegesteifigkeit des Rotorblatts und stellen in Kombination mit ebenfalls im Inneren des Rotorblatts angeordneten und befestigten Stegen die Tragstruktur des Rotorblatts dar. Die Gurte, die diese Kräfte aufnehmen und weiterleiten, weisen Fasergelege auf, die eine Orientierung in der 0°-Richtung haben, also parallel zur Längsachse des Rotorblatts.

Gurte verlaufen im Rotorblatt üblicherweise als Hauptgurte an der Innenseite der Schale an der Saugseite und an der Druckseite des Rotorblatts. Optional sind häufig zusätzlich Gurte an der Vorderkante und gegebenenfalls an der Hinterkante des Rotorblatts vorgesehen, die ebenfalls in Längsrichtung des Rotorblatts verlaufen. Diese optionalen Gurte nehmen Biegekräfte auf das Rotorblatt in der Sehnenebene des Rotorblatts auf.

Ein Hauptgurt im Rotorblatt einer Windenergieanlage wird üblicherweise entweder in Harzinfusionstechnik oder aus Prepreg-Lagen aufgebaut, um eine für das Rotorblatt notwendige Längssteifigkeit zu erreichen. Die notwendige Längssteifigkeit ergibt sich aus den Lasten, die auf das Rotorblatt wirken und beispielsweise den Parameter des Turmfreigangs, also den Abstand der Rotorblattspitze zur Turmaußenwand. Je nach Größe des Rotorblatts werden unterschiedlich viele Lagen eingelegt. So werden beispielsweise bei einem 50 m langen Rotorblatt bis zu 90 Lagen von Glasfaserverstärkungen verwendet.

Üblicherweise werden beim Bau der Hauptgurte von Rotorblättern faserverstärkte Einzellagen verwendet, die Verstärkungsfasern bzw. ein Gelege aus entsprechenden Fasern aufweisen, die eine Lagendicke von ca. 0,7 mm bei einem Faserlagengewicht von ca. 980 g/m² aus Glasfaserrovingen aufweisen. Das ausgehärtete Laminat aus diesem Gelege hat bei einem Faservolumengehalt von ca. 50% ein Elastizitätsmodul in Längsrichtung von ca. 39.000 N/mm². Das Laminat ist hierbei vorzugsweise aus Epoxidharz gebildet. Dies ergibt bei einer Lagendicke von 0,7 mm eine Längssteifigkeit von ca. 27.300 N/mm als Produkt des Elastizitätsmoduls mit der Dicke der Einzellage.

Alternativ kann der Hauptgurt auch aus kohlefaserverstärkten Einzellagen mit beispielsweise einer Dicke von 0,45 mm je Einzellage bei einem Faser-Flächengewicht von ca. 500 g/m² aus Kohlefaserrovingen und einem Elastizitätsmodul in Längsrichtung im Laminat von ca. 128.200 N/mm² aufweisen. Eine entsprechende Lage hat eine Steifigkeit von ca. 57.690 N/mm. Vereinzelt werden auch dickere Lage mit einer Dicke von bis zu 1,5 mm verwendet.

Die Hauptgurte und ggf. die Gurte an der Vorderkante und der Hinterkante eines Rotorblatts weisen üblicherweise im Bereich der Blattwurzel und in das Rotorblatt hinein eine Dicke von 3 cm bis 8 cm auf und eine Breite von 5 cm bis zu 1 m. Da die von der Rotorblattspitze zur Rotorblattwurzel über die Länge des Rotorblatts kumulierten Biegekräfte zur Rotornabe hin abgeleitet werden, ist die Dicke der Gurte zur Rotorblattwurzel hin konstant. Zur Rotorblattabspitze hin nimmt die Dicke der Gurte aufgrund der enger werdenden Platzverhältnisse und der geringeren kumulierten Biegekräfte allmählich ab.

Die Verwendung von faserverstärkten Einzellagen zur Herstellung von Gurten hat den Vorteil, dass eine hohe Festigkeit und Zugfestigkeit der Tragstruktur eingestellt wird, jedoch sind Gurte, insbesondere wenn sie aus Kohlefasern bzw. Kohlefaserrovingen hergestellt werden, sehr teuer.

Es ist daher die Aufgabe der vorliegenden Erfindung, ein Rotorblatt sowie ein Verfahren zu dessen Herstellung zur Verfügung zu stellen, wobei eine schnelle und kostengünstige Herstellung verbunden ist mit einer strukturellen Festigkeit, die der strukturellen Festigkeit von bekannten Rotorblättern wenigstens ebenbürtig ist oder diese übertrifft.

Diese Aufgabe wird durch ein Rotorblatt für eine Windenergieanlagemit den Merkmalen des Anspruchs 1 gelöst.

Die Erfindung beruht auf dem Grundgedanken, dass bei gleichbleibender oder erhöhter Festigkeit und Zugfestigkeit des Rotorblatts Material und Gewicht eingespart werden kann und die Zeit zur Herstellung des Rotorblatts verkürzt werden kann, indem der wenigstens eine Gurt zum blattwurzelseitigen Ende hin bereits deutlich vor seinem Ende verjüngt, also in seiner Dicke reduziert wird. Die dadurch auftretende geringere Zugfestigkeit des Gurtes am blattwurzelseitigen Ende wird durch die Einbringung einer Lage aus einem Faserverbundmaterial aufgefangen, die ebenfalls in 0°-Richtung ausgerichtete Fasern aufweist und die sich in einem Abschnitt entlang der Längsrichtung des Rotorblatts über die gesamte Ausdehnung des Rotorblatts von der Vorderkante des Profils bis zur Hinterkante des Profils erstreckt.

Eine solche Lage für auch als "full-chord UD"-Lage bezeichnet, wobei "futt-chord" für die gesamte Sehne, also die Linie zwischen der Vorderkante und der Hinterkante des Rotorblattprofils steht. Dabei steht die Abkürzung "UD" für "unidirektionat" also eine Lage mit in einer Richtung parallel zueinander ausgerichteten Fasern. Diese "full-chord UD"-Lage verleiht der Schale eine höhere Steifigkeit in Längsrichtung, die ausreicht, dass der Gurt am blattwurzelseitigen Ende verjüngt werden kann. Dabei wird die Schale nicht erheblich schwerer. Bei einer Blattlänge von 40 m beträgt der Bereich, in dem der Gurt zur Blattwurzel hin verjüngt werden kann, wenigstens ca. 1,20 m oder wenigstens 3% der Gurtlänge.

Die "full-chord UD"-Lage hat den weiteren technischen Effekt, dass Kräfte, die aus dem Gurt in das Schalenmaterial eingeleitet werden, großflächig auf die Schale verteilt werden. Diese Belastungen greifen somit nicht mehr stark lokalisiert am dünnen Schalenmaterial an, sondern verteilen sich über eine größere Fläche. Dadurch kann gegebenenfalls die Schale zumindest im Bereich des Gurtes etwas dünner als bisher möglich dimensioniert werden.

Vorzugsweise beträgt die Länge des blattwurzelseitigen Abschnitts des wenigstens einen Gurtes wenigstens 10%, insbesondere wenigstens 15%, insbesondere wenigstens 20%, der gesamten Länge des Gurtes. Dies kann bei einem Rotorblatt mit einer Länge von über 50 m eine Abschnittslänge von über 10 m bedeuten, innerhalb derer die Dicke des Gurtes zur Blattwurzel hin abnimmt. Dies bedeutet insbesondere bei der Verwendung von Kohlefaserverbundstoffen eine starke Material- und Kostenersparnis, insbesondere, wenn die "full-chord UD"-Lage demgegenüber aus einem Glasfaserverbundstoff hergestellt ist.

Vorzugsweise beträgt der wenigstens eine Abschnitt entlang der Längserstreckung des Rotorblatts, in dem sich die Lage eines Faserverbundwerkstoffes mit unidirektional in Richtung der Längserstreckung des Rotorblatts ausgerichteten Fasern von einer Profilvorderkante bis zu einer Profilhinterkante des Rotorblatts erstreckt, wenigstens 10%, insbesondere wenigstens 30% einer Länge des Rotorblatts. Dabei überdeckt sich vorzugsweise der Bereich, der von der "full-chord UD"-Lage abgedeckt ist, mit dem Bereich, in dem die Dicke des Gurtes abnimmt.

Weiter vorzugsweise nimmt der wenigstens eine Abschnitt entlang der Längserstreckung des Rotorblatts, in dem sich die Lage eines Faserverbundwerkstoffes mit unidirektional in Richtung der Längserstreckung des Rotorblatts ausgerichteten Fasern von einer Profilvorderkante bis zu einer Profilhinterkante des Rotorblatts erstreckt, wenigstens einen Bereich von 15% bis 30%, insbesondere wenigstens von 10% bis 50%, insbesondere wenigstens von 8% bis 80% einer Länge des Rotorblatts ein. Dies kommt der Stabilität des Rotorblatts zugute.

Erfindungsgemäß weist der wenigstens eine Gurt eine oder mehrere Hülllagen aus einem Faserverbundstoff mit unidirektional in Richtung einer Längserstreckung des Gurtes ausgerichteten Fasern auf, die eine Oberseite und/oder eine Unterseite des Gurtes im Wesentlichen vollständig abdeckt oder abdecken. Die Hülllage schließt dabei die Teile des Gurtes ein bzw. deckt diese ab, die aus rampenförmig abgestuften Lagen des Faserverbundstoffes aufgebaut sind.

Die Abnahme der Dicke des Gurtes zur Blattspitze und zur Blattwurzel hin wird in der Schicht- bzw. Lagenbauweise dadurch erzeugt, dass Schichten bzw. Lagen verschiedener Länge an gestaffelt aufeinanderfolgenden Positionen entlang der Längsachse des Rotorblatts aufgebracht werden. Dies bewirkt eine Folge von Stufen in der unteren und/oder oberen Oberfläche des Gurtes. Diese Stufen sind dadurch gefährdet, dass sich bei starken Belastungen die Laminierung an den Stufen lösen kann, so dass die Lagen ausfransen und die Integrität des Gurtes gefährdet wird. Eine Hülllage überdeckt diese Stufen und verbindet sie wiederum stoffschlüssig miteinander, so dass ein Abreißen oder Entlaminieren einzelner Lagen an ihren Enden verhindert wird.

Eine vorteilhafte Ausführungsform der Erfindung besteht darin, dass die Schale oder ein Schalenteil des Rotorblatts einen Kern aufweist, der eine in Richtung der Längserstreckung des Rotorblatts erstreckte Aussparung aufweist, in der der wenigstens eine Gurt angeordnet ist. Ein solcher Kern besteht üblicherweise aus Balsaholz oder einem Schaummaterial.

Bei der erfindungsgemäßen Weiterbildung ist der erfindungsgemäße Gurt in die Aussparung des Kernmaterials eingebettet und somit in die Schale selbst versenkt. In diesem Fall ist es vorteilhaft, wenn der Kern und der wenigstens eine Gurt mit der wenigstens einen Lage des Faserverbundwerkstoffes mit unidirektional in Richtung der Längserstreckung des Rotorblatts ausgerichteten Fasern verbunden sind, die sich wenigstens abschnittsweise von der Profilvorderkante bis zur Profilhinterkante des Rotorblatts erstreckt. Somit wird der Kern durch die erfindungsgemäße full-chord UD-Lage direkt abgedeckt. Die Belastungen, die durch den Gurt aufgenommen werden, werden somit direkt in die full-chord UD-Lage eingebracht und auf diese auf das Rotorblatt verteilt. Auf diese Weise werden punktuelle Belastungen des Schalenmaterials vermieden.

Insbesondere vorzugsweise ist der Kern mit dem in seiner Aussparung angeordneten wenigstens einen Gurt beidseitig in die ein- oder mehrteilige Schale eingebettet. Es ergibt sich bei dieser Ausführungsform eine Sandwichbauweise, in der außen und innen in der Schale ein Faserverbundmaterial mit beispielsweise "2AX45"-Lagen verwendet wird, zwischen denen der Kern mit dem darin eingelagerten Gurt angeordnet ist.

Zusätzlich dazu oder alternativ dazu ist in einer vorteilhaften Ausbildung der Erfindung vorgesehen, dass der wenigstens eine Gurt an einer Innenseite der ein- oder mehrteiligen Schale angeordnet ist. Dabei wird im Rahmen der vorliegen Erfindung unter der Innenseite diejenige Seite der Schale verstanden, die im fertigen Rotorblatt die Innenseite darstellt und die üblicherweise eine konkave Wölbung aufweist. Diese Konstruktionsweise ist, zumindest wenn kein Kern und kein Gurt im Inneren der Schale vorhanden ist, einfacher und schneller herstellbar, da die Schale bereits fertiggestellt werden kann, bevor der Gurt im fertigen Zustand oder Lage für Lage an der Innenseite der Schale angebracht wird.

Auch in diesem Fall ist es vorteilhaft, wenn der wenigstens eine Gurt mit der wenigstens einen Lage des Faserverbundwerkstoffes mit unidirektional in Richtung der Längserstreckung des Rotorblatts ausgerichteten Fasern verbunden ist, die sich wenigstens abschnittsweise von der Profilvorderkante bis zur Profilhinterkante des Rotorblatts erstreckt. Auch in diesem Fall werden die punktuellen Belastungen, die der Gurt auf das Schalenmaterial ausübt, weitflächig in das Schalenmaterial eingeleitet und somit schädliche punktuelle Belastungen der Schale vermieden oder vermindert.

Die der Erfindung zugrunde liegende Aufgabe wird weiter gelöst durch eine Windenergieanlage mit einem erfindungsgemäßen zuvor beschriebenen Rotorblatt.

Die der Erfindung zugrunde liegende Aufgabe wird schließlich auch gelöst durch ein Verfahren zum Herstellen eines Rotorblatts für eine Windenergieanlagemit den Merkmalen des Anspruchs 11. Mittels dieses erfindungsgemäßen Verfahrens ist das oben beschriebene erfindungsgemäße Rotorblatt herstellbar, das die bereits genannten Eigenschaften und Vorteile aufweist.

Dabei umfasst im Rahmen der vorliegenden Erfindung das Merkmal des Zusammenfügens des Gurtes mit der Schale sowohl die separate Herstellung von Gurt und Schale mit anschließendem An- bzw. Einbringen des Gurtes in der Schale, als auch das Einbauen des Gurtes in die noch nicht vollständig fertiggestellte Schale.

Weitere vorteilhafte Verfahrensschritte führen zu den weiteren oben beschriebenen Ausbildungen des erfindungsgemäßen Rotorblatts. Dies betrifft insbesondere die zusätzlichen und/oder alternativen Schritte, eine Schale mit einem Kern herzustellen, in diesem Kern eine längserstreckte Aussparung zu erzeugen und in die Aussparung einen Gurt einzulegen und mit dem Kern zu verbinden.

Bei einem erfindungsgemäßen Verfahren wird ein Gurt mit einer Hülllage an seiner Unterseite und/oder seiner Oberseite versehen.

Vorzugsweise wird ein Gurt an einer Innenseite einer Schale oder eines Schalenteils befestigt. Ebenfalls vorzugsweise wird die wenigstens eine "full-chord UD"-Lage, also die wenigstens eine Lage eines Faserverbundwerkstoffes mit unidirektional in Richtung der Längserstreckung des Rotorblatts ausgerichteten Fasern, die sich in wenigstens einem Abschnitt entlang der Längserstreckung des Rotorblatts von einer Profilvorderkante bis zu einer Profilhinterkante des Rotorblatts erstreckt, mit dem Gurt verbunden.

Sämtliche Merkmale und Vorteile, die zu einem der Erfindungsgegenstände genannt worden sind, gelten in gleicher Weise auch für die anderen Erfindungsgegenstände, also das erfindungsgemäße Rotorblatt, die erfindungsgemäße Windenergieanlage und das erfindungsgemäße Verfahren zum Herstellen des erfindungsgemäßen Rotorblatts.

Die Erfindung wird nachstehend ohne Beschränkung des allgemeinen Erfindungsgedankens anhand von Ausfuhrungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Rotorblatts,
- Fig. 2: eine schematische Querschnittsdarstellung durch einen Teil eines erfindungsgemäßen Rotorblatts,
- Fig. 3: eine schematische Querschnittsdarstellung durch einen Teil eines weiteren erfindungsgemäßen Rotorblatts,
- Fig. 4a): eine schematische Draufsicht auf ein erfindungsgemäßes Rotorblatt mit einem erfindungsgemäßen Gurt,
- Fig. 4b): eine schematische Darstellung der Lagen des Gurtes gemäß Fig. 4a),
- Fig. 4c): eine schematische Darstellung einer Draufsicht auf das wurzelseitige Ende des Gurtes gemäß Fig. 4a) und 4b),
- Fig. 5a): eine schematische Draufsicht auf ein weiteres erfindungsgemäßes Rotorblatt mit einem erfindungsgemäßen Gurt,
- Fig. 5b): eine schematische Darstellung der Lagen des Gurtes gemäß Fig. 5a),
- Fig. 5c): eine schematisch Darstellung einer Draufsicht auf das wurzelseitige Ende des Gurtes gemäß Fig. 5a) und 5b),
- Fig. 6a): eine schematische Draufsicht auf ein weiteres erfindungsgemäßes Rotorblatt mit einem erfindungsgemäßen Gurt,
- Fig. 6b): eine schematische Querschnittsdarstellung eines Profils des Rotorblatts gemäß Fig. 6a) und
- Fig. 6c): eine schematische Darstellung der Lagen des Gurtes gemäß Fig. 6a).

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

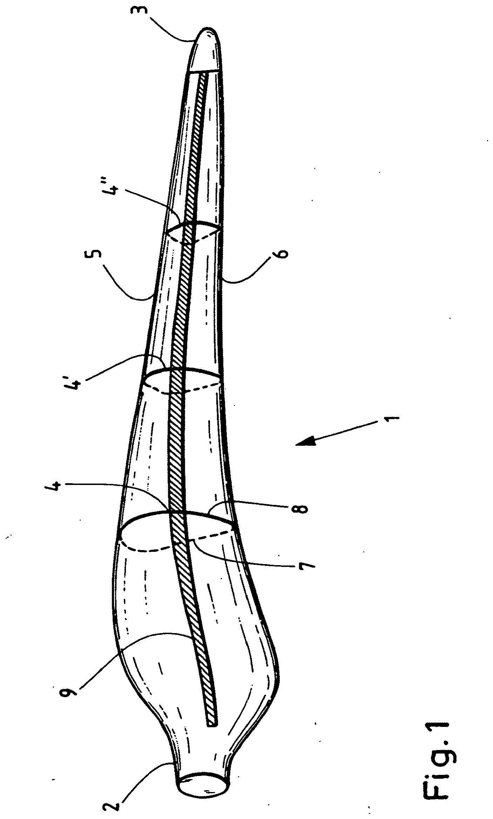

Fig. 1 zeigt schematisch ein erfindungsgemäßes Rotorblatt 1, das eine Längserstreckung von einer Rotorblattwurzel 2 zu einer Rotorblattspitze 3 aufweist. Im Rotorblatt 1 sind Querschnittsprofile 4, 4', 4" dargestellt, die aerodynamisch aktiv sind und eine Saugseite 7 sowie eine Druckseite 8 aufweisen. Die aerodynamischen Querschnittsprofile 4, 4', 4" weisen ferner eine Profilvorderkante 5 und eine Profilhinterkante 6 auf. Die Profilvorderkante 5 wird auch als "Nase" des Profils bezeichnet.

Fig. 1 zeigt ferner einen Gurt 9, der sich entlang der Längserstreckung des Rotorblatts 1 erstreckt. Der Gurt 9 endet vor der Spitze 3 und vor der Rotorblattwurzel 2 des Rotorblatts 1. In Fig. 1 ist erkennbar, dass der Gurt sich der Biegung des Rotorblatts 1 anpasst und nicht vollständig gerade ist. Die Abweichungen von der Geraden sind in Fig. 1 zur Veranschaulichung nicht maßstabsgetreu und übertrieben dargestellt. Im Wesentlichen folgt der Gurt 9 lokal jeweils der Längserstreckung des Rotorblatts 1. Bei der Draufsicht ist eine zusätzliche Verwindung um die Längsachse nicht dargestellt.

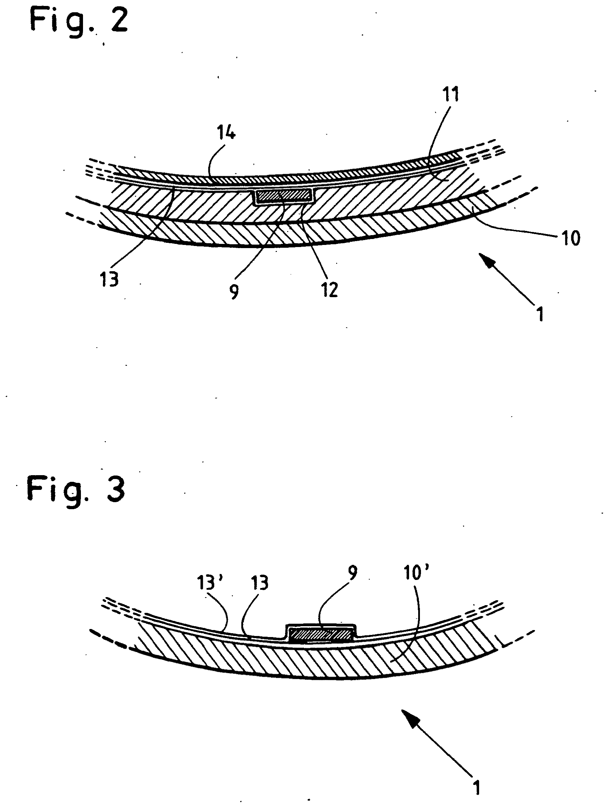

In Fig. 2 ist ein Ausschnitt aus einem erfindungsgemäßen Rotorblatt 1 im Querschnitt schematisch dargestellt. Es handelt sich um einen Querschnitt durch eine Schale oder eine Halbschale eines Rotorblatts 1, das aus einem äußeren Schalenteil 10 aus einem Faserverbundstoff mit "2AX45"-Lagen besteht, also Faserverbundstofflagen, deren Fasern in zwei Hauptrichtungen mit +45° und -45° zur Längsachse des Rotorblatts 1 angeordnet sind. An der Innenseite ist eine weitere Schicht bzw. ein weiteres Schalenteil 14 aus einem entsprechenden Faserverbundstoff mit "2AX45"-Lagen vorhanden.

Die Schalenteile 10 und 14 schließen einen Kern 11 aus Balsaholz oder einem Schaummaterial ein, das eine Aussparung 12 aufweist, die entlang der in die Blattebene hinein erstreckten Längsrichtung des Rotorblatts 1 verläuft. In der Aussparung 12 ist der erfindungsgemäße Gurt 9 eingebracht. Die Form des Gurtes 9 und der Aussparung 12 sind aneinander angepasst.

Bei der Herstellung des Rotorblatts 1 gemäß Fig. 2 wird der Gurt 9 großflächig mit dem Kern 11 bzw. mit den Seitenwänden und dem Boden der Aussparung 12 des Kerns 11 verbunden. Zwischen dem Kern 11 und dem Gurt 9 einerseits und dem Schalenteil 14 andererseits befindet sich in diesem Ausführungsbeispiel eine Lage 13 mit unidirektional in Richtung der Längsachse des Rotorblatts 1 ausgerichteten Fasern, eine so genannte "full-chord-UD"-Lage. Diese ist großflächig mit dem Kern 11, dem Schalenteil 14 und dem Gurt 9 verbunden. Da die Fasern in der Lage 13 parallel zu den Fasern im Gurt 9 ausgerichtet sind, werden Biegebelastungen, die durch den Gurt 9 aufgenommen werden, auch in die Lage 13 eingeleitet und so auf eine große Fläche zwischen der Vorderkante und der Hinterkante des Profils verteilt. So treten weniger punktuelle Belastungen auf und die strukturelle Integrität des Rotorblatts 1 wird verbessert.

In Fig. 3 ist eine alternative Ausführungsform schematisch im Querschnitt dargestellt. Ein äußeres Schalenteil 10' aus einem Faserverbundmaterial, das aus Lagen von "2AX45"-Getegen aufgebaut ist, ist nach innen hin unmittelbar mit einer Lage 13 mit in Richtung der Längsachse des Rotorblatts 1 ausgerichteten Fasern verbunden. Hierauf ist einerseits ein Gurt 9 angeordnet und mit der "futt-chord UD"-Lage 13 verbunden. In diesem Ausführungsbeispiel ist eine weitere "futt-chord UD"-Lage 13' mit in Längsrichtung des Rotorblatts 1 ausgerichteten Fasern vorgesehen, die sowohl die erste Lage 13 als auch den Gurt 9 umschließt.

Auch mit der in Fig. 3 gezeigten Variante werden die Kräfte, die vom Gurt 9 aufgenommen werden, gleichmäßiger als bisher über die Breite der Schale bzw. des Schalenteils 10' verteilt. Insbesondere werden dadurch Scherkräfte zwischen den verschiedenen Materialien vermindert, die ansonsten zum Bruch oder zu Ablösungen des Gurtes vom Schalenmaterial führen könnten.

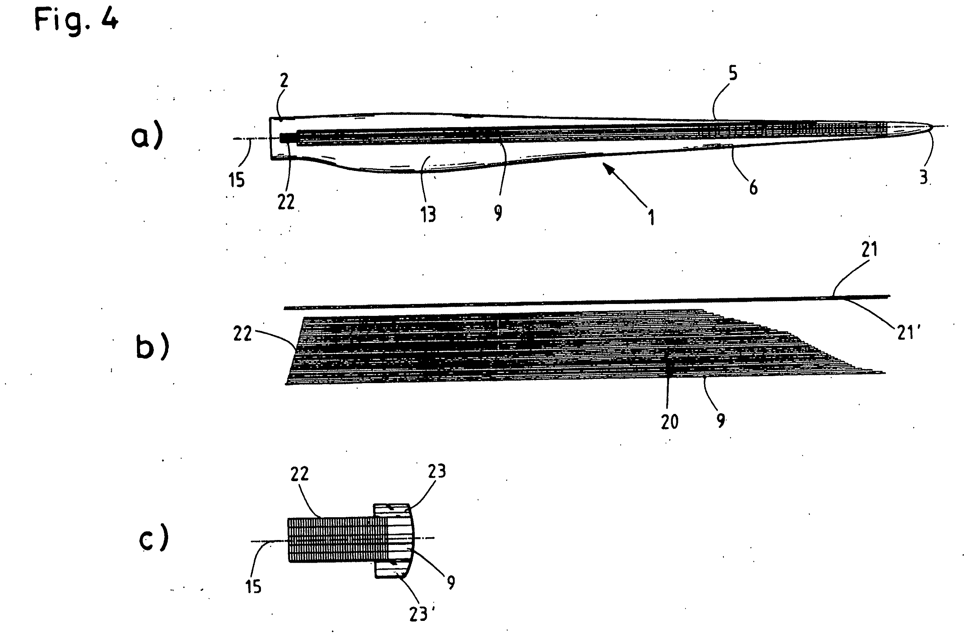

In Fig. 4 sind verschiedene Aspekte eines erfindungsgemäßen Rotorblatts 1 schematisch dargestellt. Das in Fig. 4a) bis 4c) dargestellte Beispiel entspricht einem Rotorblatt mit einer Länge von ca. 40 m.

Fig. 4a) zeigt eine schematische Draufsicht auf ein erfindungsgemäßes Rotorblatt 1, dessen Längsachse mit dem Bezugszeichen 15 gekennzeichnet ist. Auf der Längsachse 15, die durch die Blattwurzel 2 und die Blattspitze 3 verläuft, ist ein Gurt 9 angeordnet, der vor der Blattspitze 3 und vor der Blattwurzel 2 endet. Am blattspitzenseitigen Ende sind mit Querstrichen die Enden der einzelnen übereinander geschichteten Lagen des Gurtes 9 dargestellt. Am blattwurzelseitigen Ende nimmt die Dicke des Gurtes 9 ebenfalls ab, wobei dies jedoch mit einer kürzeren und dichten Aufeinanderfolge von Lagenenden in einer Rampe 22 geschieht, die daher in Fig. 4a) dunkel erscheint. Die Rampe 22 entspricht einem Abschnitt, der in Längsrichtung des Rotorblatts 1 eine Länge von ca. 1,20 m aufweist.

Das Rotorblatt 1 weist außerdem eine "full-chord-UD"-Lage 13 auf, die sich entlang des gesamten Rotorblatts 1 von der Vorderkante 5 bis zur Hinterkante 6 erstreckt.

In Fig. 4b) ist eine Lagenabfolge der Lagen 20 des Gurts 9 aus dem Rotorblatt 1 gemäß Fig. 4a) schematisch dargestellt. Die einzelnen Lagen sind jeweils bezüglich ihrer Länge, d.h. dem Anfangspunkt und dem Endpunkt entlang der Länge des Rotorblatts 1 dargestellt. sämtliche Kurven, Verwindungen usw. sind nicht dargestellt. Es handelt sich somit um einen rein legetechnischen Plan.

Deutlich sichtbar ist in Fig. 4b), dass am wurzelseitigen Ende die Lagen 20 gestaffelt hintereinander übereinander gelegt werden, so dass eine Rampe 22 entsteht. Am blattspitzenseitigen Ende nimmt die Dicke des Gurtes 9 durch gestaffelte Lagenenden wiederum ab, wobei jedoch die Abnahme der Dicke über einen größeren Längenabschnitt erfolgt. Es sind außerdem zwei Hülllagen 21, 21' dargestellt, die nach Erstellung des Gurtes mit den Lagen 20 über die gesamte Länge des Gurtes 9 gelegt werden, um die Stufen, die durch die gestaffelt bzw. gestuft angeordneten Lagen entstehen, abzudecken und diese vor einem Entlaminieren zu bewahren.

Die Abbildung in Fig. 4b) ist nicht maßstabsgetreu. Die Länge der längsten Lagen beträgt ca. 37 m, während die Dicke des Gurtes 9 insgesamt ca. 3 cm bis 5 cm beträgt.

In Fig. 4c) ist ein Detail aus Fig. 4a) im Ausschnitt dargestellt. Es handelt sich um das wurzelblattseitige Ende des Gurtes 9, das in einer Draufsicht schematisch dargestellt ist. Deutlich zu erkennen sind die aufeinander folgenden Lagenenden, die durch Linien dargestellt sind und in Fig. 4a) zu einem dunklen Block verschmolzen waren.

Die Länge des Abschnittes, in dem sich die Rampe 22 aufbaut, die auf die Längsachse 15 zentriert ist, beträgt ca. 1,20 m. Die Breite des Gurtes 9 beträgt ca. 50 cm. Gegen das Ende der Rampe 22 verschoben sind Sandwich-Übergänge 23, 23' in einer Breite von 15 cm bis 20 cm vorgesehen, die aus Balsaholz oder einem ähnlichen leichten, aber stabilen Material bestehen und die einen Übergang vom Gurt 9 zum darunterliegenden Schalenteil bilden.

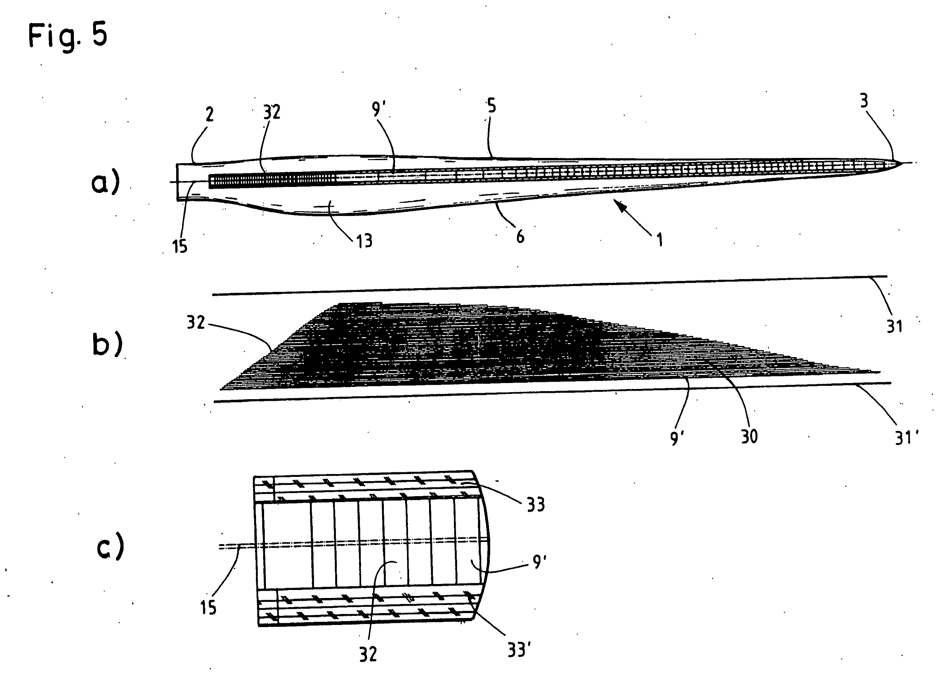

In Fig. 5 ist ein weiteres Beispiel eines erfindungsgemäßen Rotorblatts 1 mit einem Gurt 9' dargestellt. Das Rotorblatt 1 weist eine Länge von ca. 46 m auf.

Wie aus Fig. 5a) erkennbar ist, weist der Gurt 9' eine Rampe 32 im Bereich der Blattwurzel 2 auf, die über einen größeren Bereich erstreckt ist als im Ausführungsbeispiel gemäß Fig. 4a). Waren im Ausführungsbeispiel gemäß Fig. 4a) ca. 40 Lagen für die Herstellung des Gurtes 9 verwendet worden, so sind im Ausführungsbeispiel gemäß Fig. 5 ca. 54 Lagen vorhanden.

Die Rampe 32 erstreckt sich über einen Bereich von ca. 8 m. Die Abnahme der Dicke des Gurtes 9' zur Blattspitze 3 hin, die in Fig. 5a) durch Querstriche erkennbar ist und in Fig. 5b) in der Seitenansicht deutlich erkennbar ist, beginnt kurz nach Erreichen der maximalen Dicke bei ca. 11 m der Rotorblattlänge und erstreckt sich über die restliche Länge des Gurtes 9'. Der Gurt 9' hat eine Breite von ca. 50 cm.

In Fig. 5b) sind ebenfalls die Lagen 30 des Gurtes 9' eingezeichnet. An seiner Oberseite und seiner Unterseite ist der Gurt 9' jeweils mit einer Hülllage 31, 31' versehen, die die Oberseite bzw. Unterseite einhüllt und die gesamte Länge des Gurtes 9' überspannt.

Wie in Fig. 5c) erkennbar ist, ist die Längsachse 15 innerhalb eines Toleranzbereiches von 5 mm eingezeichnet. An den Gurt 9' schließen sich zur Schale hin Sandwich-Übergänge oder Balsaränder 33, 33' an.

Wie in Fig. 5a) und auch bereits Fig. 4a) zu sehen ist, gerät der Sandwich-Rand und ggf. auch der Gurt 9 in Richtung auf die Blattspitze 3 sehr nahe an die Vorderkante 5 bzw. die Hinterkante 6 des Rotorblattprofils. An diesen Stellen ist der Gurt 9, 9' bzw. sind die Sandwich-Übergänge 23, 23' bzw. 33, 33' in ihrer Länge bzw. Breite reduziert.

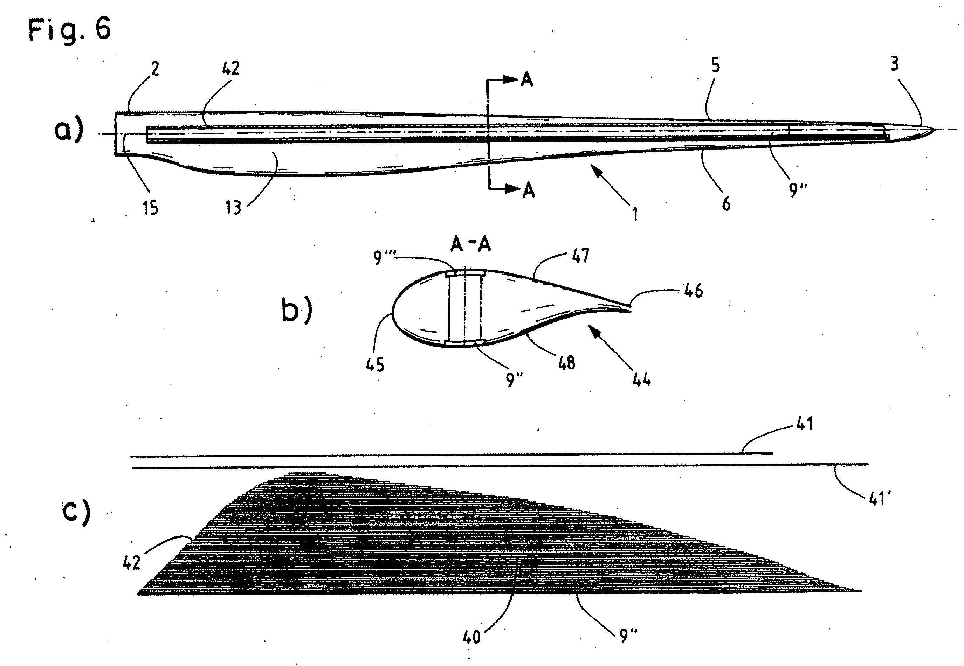

In Fig. 6 ist ein drittes Ausführungsbeispiel eines erfindungsgemä-βen Rotorblatts 1 dargestellt, wobei in Fig. 6a) wiederum eine Draufsicht auf das Rotorblatt 1 und in Fig. 6c) eine Seitenansicht des Lagenplans eines Gurtes 9" des Rotorblatts 1 gemäß Fig. 6a) dargestellt ist. In Fig. 6b) ist ein Querschnitt des Rotorblattprofils entlang einer Querschnittslinie A-A aus Fig. 6a) dargestellt.

Bei dem in Fig. 6a) dargestellten Rotorblatt 1 handelt es sich um ein Rotorblatt, das eine Länge von ca. 50 m besitzt. Der Gurt weist eine Länge von ca. 46 m mit über 70 Lagen eines unidirektionalen Faserverbundstoffes auf. Die Dicke des Gurtes beträgt an seiner dicksten Stelle ca. 5 cm bis 8 cm. Der Gurt gemäß Fig. 6 hat eine Breite von ca. 60 cm und ist, wie in Fig. 6a) dargestellt, mit einem Balsa-Rand versehen, der zu beiden Seiten 15 cm bis 20 cm breit ist.

Eine Rampe 42, die in Fig. 6c) zu erkennen ist, hat eine Abschnittslänge von ca. 10 m bzw. über 20% der gesamten Gurtlänge. Der Gurt 9" wird von zwei Hülllagen 41, 41' überstrichen, die die abgestuften Enden der einzelnen Lagen 40 überstreichen und ein Entlaminieren verhindern. Die Hülllagen 41, 41' sind im am stärksten belasteten Bereich doppellagig ausgeführt.

In Fig. 6b) ist ein Querschnittsprofil 44 des Rotorblatts 1 gemäß Fig. 6a) entlang einer Schnittlinie A-A dargestellt. Es ist ein Querschnittsprofil 44 mit einer dünnen Schale dargestellt, das sich zwischen einer Vorderkante 45 und einer Hinterkante 46 erstreckt und eine Saugseite 47 und eine Druckseite 48 aufweist. Ebenfalls ist dargestellt, dass an der Saugseite 47 und an der Druckseite 48 jeweils ein Gurt 9" angeordnet ist, der mit der Schale an der entsprechenden Stelle jeweils flächig verbunden ist.

Die Schale weist an der Saugseite 47 und an der Druckseite 48 erfindungsgemäß jeweils eine "full-chord UD"-Lage 13 auf, die sich wenigstens abschnittsweise von der Vorderkante 45 bis zur Hinterkante 46 erstreckt. Eine solche "full-chord UD"-Lage 13 ist an der Saugseite 47 und/oder der Druckseite 48 vorgesehen.

### Bezugszeicheniiste

- 1: Rotorblatt
- 2: Rotorblattwurzel
- 3: Rotorblattspitze
- 4, 4', 4": Querschnittsprofil
- 5: Profilvorderkante
- 6: Profilhinterkante
- 7: Saugseite
- 8: Druckseite
- 9 - 9'": Gurt
- 10, 10': Schalenteil
- 11: Kern
- 12: Aussparung
- 13, 13': unidirektionale Lage
- 14: Schalenteil
- 15: Längsachse
- 20: Gurtlagen
- 21, 21': Hülllagen
- 22: Rampe
- 23, 23': Sandwichübergang
- 30: Gurtlagen
- 31, 31': Hülllagen
- 32: Rampe
- 40: Gurtlagen
- 41, 41': Hülllagen
- 42: Rampe
- 44: Querschnittsprofil
- 45: Vorderkante
- 46: Hinterkante
- 47: Saugseite
- 48: Druckseite

## Patentansprüche

1. Rotorblatt (1) für eine Windenergieanlage, das sich von einer Rotorblattwurzel (2) im Wesentlichen zu einer Rotorblattspitze (3) erstreckt, umfassend eine ein- oder mehrteilige Schale (10, 10′, 14), die wenigstens teilweise aus einem Faserverbundwerkstoff hergestellt ist, und wenigstens einen Gurt (9 - 9‴), der im Rotorblatt (1) im Wesentlichen in Richtung einer Längserstreckung des Rotorblatts (1) angeordnet ist, wobei der wenigstens eine Gurt (9 - 9‴) Lagen aus einem Faserverbundwerkstoff mit unidirektional in Richtung einer Längserstreckung des Gurtes (9 - 9‴) ausgerichteten Fasern aufweist, **dadurch gekennzeichnet, dass** eine Dicke des wenigstens einen Gurtes (9 - 9‴) in einem blattwurzelseitigen Abschnitt zur Blattwurzel (2) hin abnimmt, dessen Länge wenigstens 3% einer gesamten Länge des Gurtes (9 - 9‴) beträgt, wobei am wurzelseitigen Ende des Gurtes die Lagen (20) gestaffelt hintereinander übereinander gelegt sind, so dass eine Rampe (22) entsteht, wobei der wenigstens eine Gurt (9 - 9‴) eine oder mehrere Hülllagen (21, 21′, 31, 31′, 41, 41′) aus einem Faserverbundstoff mit unidirektional in Richtung einer Längserstreckung des Gurtes (9 - 9‴) ausgerichteten Fasern aufweist, die eine Oberseite und/oder eine Unterseite des Gurtes (9 - 9‴) im Wesentlichen vollständig abdeckt oder abdecken, und wobei die Schale (10, 10′, 14) wenigstens eine Lage (13, 13′) eines Faserverbundwerkstoffes mit unidirektional in Richtung der Längserstreckung des Rotorblatts (1) ausgerichteten Fasern aufweist, wobei die Lage (13, 13′) sich in wenigstens einem Abschnitt entlang der Längserstreckung des Rotorblatts (1) von einer Profilvorderkante (5, 45) bis zu einer Profilhinterkante (6, 46) des Rotorblatts (1) erstreckt.

2. Rotorblatt (1) nach Anspruch 1, **dadurch gekennzeichnet, dass** die Länge des blattwurzelseitigen Abschnitts des wenigstens einen Gurtes (9 - 9‴) wenigstens 10%, insbesondere wenigstens 15%, insbesondere wenigstens 20%, der gesamten Länge des Gurtes (9 - 9'") beträgt.

3. Rotorblatt (1) nach Anspruch 1 oder 2, **dadurch gekennzeichnet, dass** der wenigstens eine Abschnitt entlang der Längserstreckung des Rotorblatts (1), in dem sich die Lage (13, 13') eines Faserverbundwerkstoffes mit unidirektional in Richtung der Längserstreckung des Rotorblatts (1) ausgerichteten Fasern von einer Profilvorderkante (5, 45) bis zu einer Profilhinterkante (6, 46) des Rotorblatts (1) erstreckt, wenigstens 10%, insbesondere wenigstens 30% einer Länge des Rotorblatts (1) beträgt.

4. Rotorblatt (1) nach einem der Ansprüche 1 bis 3, **dadurch gekennzeichnet, dass** der wenigstens eine Abschnitt entlang der Längserstreckung des Rotorblatts (1), in dem sich die Lage (13, 13') eines Faserverbundwerkstoffes mit unidirektional in Richtung der Längserstreckung des Rotorblatts (1) ausgerichteten Fasern von einer Profilvorderkante (5, 45) bis zu einer Profilhinterkante (6, 46) des Rotorblatts (1) erstreckt, wenigstens einen Bereich von 15% bis 30%, insbesondere wenigstens von 10% bis 50%, insbesondere wenigstens von 8% bis 80% einer Länge des Rotorblatts (1) einnimmt.

5. Rotorblatt (1) nach einem der Ansprüche 1 bis 4, **dadurch gekennzeichnet, dass** die Schale (10, 10', 14) oder ein Schalenteil des Rotorblatts einen Kern (11) aufweist, der eine in Richtung der Längserstreckung des Rotorblatts erstreckte Aussparung (12) aufweist, in der der wenigstens eine Gurt (9 - 9'") angeordnet ist.

6. Rotorblatt (1) nach Anspruch 5, **dadurch gekennzeichnet, dass** der Kern (11) und der wenigstens eine Gurt (9 - 9'") mit der wenigstens einen Lage (13, 13') des Faserverbundwerkstoffes mit unidirektional in Richtung der Längserstreckung des Rotorblatts (1) ausgerichteten Fasern verbunden sind, die sich wenigstens abschnittsweise von der Profilvorderkante (5, 45) bis zur Profilhinterkante (6, 46) des Rotorblatts (1) erstreckt.

7. Rotorblatt (1) nach Anspruch 5 oder 6, **dadurch gekennzeichnet, dass** der Kern (11) mit dem in seiner Aussparung (12) angeordneten wenigstens einen Gurt (9 - 9'") beidseitig in die ein- oder mehrteilige Schale (10, 14) eingebettet ist.

8. Rotorblatt (1) nach einem der Ansprüche 1 bis 7, **dadurch gekennzeichnet, dass** der wenigstens eine Gurt (9 - 9'") an einer Innenseite der ein- oder mehrteiligen Schale (10, 10', 14) angeordnet ist.

9. Rotorblatt (1) nach Anspruch 8, **dadurch gekennzeichnet, dass** der wenigstens eine Gurt (9 - 9'") mit der wenigstens einen Lage (13, 13') des Faserverbundwerkstoffes mit unidirektional in Richtung der Längserstreckung des Rotorblatts (1) ausgerichteten Fasern verbunden ist, die sich wenigstens abschnittsweise von der Profilvorderkante (5, 45) bis zur Profilhinterkante (6, 46) des Rotorblatts (1) erstreckt.

10. Windenergieanlage mit wenigstens einem Rotorblatt (1) nach einem der Ansprüche 1 bis 9.

11. Verfahren zum Herstellen eines Rotorblatts (1) für eine Windenergieanlage, das sich von einer Rotorblattwurzel (2) im Wesentlichen zu einer Rotorblattspitze (3) erstreckt, wobei eine ein- oder mehrteilige Schale (10, 10′, 14) wenigstens teilweise aus einem Faserverbundwerkstoff hergestellt wird und wenigstens ein Gurt (9 - 9‴), der im Rotorblatt (1) im Wesentlichen in Richtung einer Längserstreckung des Rotorblatts (1) angeordnet ist, aus Lagen aus einem Faserverbundwerkstoff mit unidirektional in Richtung einer Längserstreckung des Gurtes (9 - 9‴) ausgerichteten Fasern hergestellt und mit der ein- oder mehrteiligen Schale (10, 10′, 14) zusammengefügt wird, **dadurch gekennzeichnet, dass** eine Dicke des wenigstens einen Gurtes (9 - 9‴) in einem blattwurzelseitigen Abschnitt zur Blattwurzel (2) hin reduziert wird, dessen Länge wenigstens 3% einer gesamten Länge des Gurtes (9 - 9‴) beträgt, wobei am wurzelseitigen Ende des Gurtes die Lagen (20) gestaffelt hintereinander übereinander gelegt werden, so dass eine Rampe (22) entsteht, wobei der wenigstens eine Gurt (9 - 9‴) eine oder mehrere Hülllagen (21, 21′, 31, 31′, 41, 41′) aus einem Faserverbundstoff mit unidirektional in Richtung einer Längserstreckung des Gurtes (9 - 9'") ausgerichteten Fasern aufweist, die eine Oberseite und/oder eine Unterseite des Gurtes (9 - 9'") im Wesentlichen vollständig abdeckt oder abdecken, und wobei die Schale (10, 10', 14) mit wenigstens einer Lage (13, 13') eines Faserverbundwerkstoffes mit unidirektional in Richtung der Längserstreckung des Rotorblatts (1) ausgerichteten Fasern versehen wird, wobei die Lage (13, 13') sich in wenigstens einem Abschnitt entlang der Längserstreckung des Rotorblatts (1) von einer Profilvorderkante (5, 45) bis zu einer Profilhinterkante (6, 46) des Rotorblatts (1) erstreckt.

## Claims

1. A rotor blade (1) for a wind turbine, which extends from a rotor blade root (2) substantially to a rotor blade tip (3), comprising a single- or multi-part shell (10, 10′, 14), which is made at least partially of a fibre composite material, and at least one spar cap (9 - 9‴), which is arranged in the rotor blade (1) substantially in the direction of a lengthwise extent of the rotor blade (1), wherein the at least one spar cap (9 - 9‴) comprises layers of a fibre composite material with fibres unidirectionally aligned in the direction of a lengthwise extent of the spar cap (9 - 9‴), **characterised in that** a thickness of the at least one spar cap (9 - 9‴) decreases towards the blade root (2) in a portion located towards the blade root, the length of which is at least 3% of a total length of the spar cap (9 - 9‴), wherein, at the end of the spar cap located towards the root, the layers (20) are placed on top of each other in a staggered manner so that this results in a ramp (22), wherein the at least one spar cap (9 - 9‴) comprises one or more sheath layers (21, 21', 31, 31', 41, 41') of a fibre composite material with fibres that are aligned unidirectionally in the direction of a lengthwise extent of the spar cap (9 - 9‴), which substantially completely covers or cover an upper surface and / or a lower surface of the spar cap (9 - 9‴), and wherein the shell (10, 10', 14) comprises at least one layer (13, 13') of a fibre composite material with fibres unidirectionally aligned in the direction of the lengthwise extent of the rotor blade (1), wherein the layer (13, 13') extends, in at least one portion, along the lengthwise extent of the rotor blade (1) from a profile leading edge (5, 45) to a profile trailing edge (6, 46) of the rotor blade (1).

2. The rotor blade (1) as claimed in claim 1, **characterised in that** the length of the portion located towards the blade root of the at least one spar cap (9 - 9'") is at least 10%, in particular at least 15%, in particular at least 20%, of the total length of the spar cap (9-9‴).

3. The rotor blade (1) as claimed in claim 1 or 2, **characterised in that** the at least one portion along the lengthwise extent of the rotor blade (1), in which the layer (13, 13') of a fibre composite material with fibres unidirectionally aligned in the direction of the lengthwise extent of the rotor blade (1) extends from a profile leading edge (5, 45) to a profile trailing edge (6, 46) of the rotor blade (1) is at least 10%, in particular at least 30%, of a length of the rotor blade (1).

4. The rotor blade (1) as claimed in one of claims 1 to 3, **characterised in that** the at least one portion along the lengthwise extent of the rotor blade (1), in which the layer (13, 13') of a fibre composite material with fibres unidirectionally aligned in the direction of the lengthwise extent of the rotor blade (1) extends from a profile leading edge (5, 45) to a profile trailing edge (6, 46) of the rotor blade (1), occupies at least a range of 15% to 30%, in particular at least 10% to 50%, in particular at least 8% to 80%, of a length of the rotor blade (1).

5. The rotor blade (1) as claimed in any one of claims 1 to 4, **characterised in that** the shell (10, 10', 14) or a shell part of the rotor blade comprises a core (11), which has a recess (12), which extends in the direction of the lengthwise extent of the rotor blade and in which the at least one spar cap (9 - 9‴) is arranged.

6. The rotor blade (1) as claimed in claim 5, **characterised in that** the core (11) and the at least one spar cap (9 - 9‴) are connected to the at least one layer (13, 13') of the fibre composite material with fibres unidirectionally aligned in the direction of the lengthwise extent of the rotor blade (1), which extends, at least in sections, from the profile leading edge (5, 45) to the profile trailing edge (6, 46) of the rotor blade (1).

7. The rotor blade (1) as claimed in claim 5 or 6, **characterised in that** the core (11) with the at least one spar cap (9 - 9‴) arranged in its recess (12) is embedded on both sides in the single- or multi-part shell (10, 14).

8. The rotor blade (1) as claimed in any one of claims 1 to 7, **characterised in that** the at least one spar cap (9 - 9‴) is arranged on an inner surface of the single- or multi-part shell (10, 10', 14).

9. The rotor blade (1) as claimed in claim 8, **characterised in that** the at least one spar cap (9 - 9‴) is connected to the at least one layer (13, 13') of the fibre composite material with fibres aligned unidirectionally in the direction of the lengthwise extent of the rotor blade (1), which extends, at least in sections, from the profile leading edge (5, 45) to the profile trailing edge (6, 46) of the rotor blade (1).

10. A wind turbine with at least one rotor blade (1) as claimed in any one of claims 1 to 9.

11. A method of manufacturing a rotor blade (1) for a wind turbine, which extends from a rotor blade root (2) substantially to a rotor blade tip (3), wherein a single- or multi-part shell (10, 10', 14) is produced at least partially from a fibre composite material and at least one spar cap (9 - 9‴), which is arranged in the rotor blade (1) substantially in the direction of a lengthwise extent of the rotor blade (1), is produced from layers of a fibre composite material with fibres aligned unidirectionally in the direction of a lengthwise extent of the spar cap (9 - 9‴) and is connected to the single - or multi-part shell (10, 10', 14), **characterised in that** a thickness of the at least one spar cap (9 - 9‴) is reduced towards the blade root (2) in a portion located towards the blade root, the length of which is at least 3% of a total length of the spar cap (9 - 9‴), wherein, at the end of the spar cap located towards the root, the layers (20) are placed on top of each other in a staggered manner so that this results in a ramp (22), wherein the at least one spar cap (9 - 9‴) comprises one or more sheath layers (21, 21', 31, 31', 41, 41') of a fibre composite material with fibres that are aligned unidirectionally in the direction of a lengthwise extent of the spar cap (9 - 9‴), which substantially completely covers or cover an upper surface and / or a lower surface of the spar cap (9 - 9‴), and wherein the shell (10, 10', 14) is provided with at least one layer (13, 13') of a fibre composite material with fibres aligned unidirectionally in the direction of the lengthwise extent of the rotor blade (1), wherein the layer (13, 13') extends in at least one portion along the lengthwise extent of the rotor blade (1) from a profile leading edge (5, 45) to a profile trailing edge (6, 46) of the rotor blade (1).

## Revendications

1. Pale de rotor (1) pour une installation éolienne, qui s'étend sensiblement d'une racine de la pale de rotor (2) vers une pointe de pale de rotor (3), comprenant une coque en une ou plusieurs parties (10, 10', 14) qui est au moins partiellement réalisée en un matériau composite à fibres, et au moins un longeron (9 - 9‴) qui est agencé dans la pale de rotor (1) sensiblement dans le sens de l'extension longitudinale de la pale de rotor (1), dans laquelle ledit au moins un longeron (9 - 9‴) comprend des couches d'un matériau composite à fibres dont les fibres sont orientées de manière unidirectionnelle dans le sens de l'extension longitudinale de ledit au moins un longeron (9 - 9‴), **caractérisée en ce qu'** une épaisseur de ledit au moins un longeron (9 - 9‴) diminue vers la racine de la pale de rotor (2) dans une partie sur le côté de la racine de la pale de rotor (2), dont la longueur est au moins 3% de la longueur totale de ledit au moins un longeron (9 - 9‴), les couches (20) étant superposées de manière échelonnée les unes derrière les autres à l'extrémité côté de la racine de ledit au moins un longeron, de sorte qu'il se forme une rampe (22), ledit au moins un longeron (9 - 9‴) présentant une ou plusieurs couches de gaine (21, 21', 31, 31', 41, 41') constituées d'un matériau composite à fibres dont les fibres sont orientées de manière unidirectionnelle dans le sens de l'extension longitudinale de ledit au moins un longeron (9 - 9‴), lesdites couches de gaine recouvrant sensiblement entièrement ou partiellement une partie supérieure et / ou une partie inférieure de ledit au moins un longeron (9 - 9‴), et dans lequel la coque (10, 10', 14) comprend au moins une couche (13, 13') d'un matériau composite à fibres dont les fibres sont orientées de manière unidirectionnelle dans le sens de l'extension longitudinale de la pale de rotor (1), la couche (13, 13') s'étendant, dans au moins une section le long de l'extension longitudinale de la pale de rotor (1), d'un bord d'attaque (5, 45) à un bord de fuite (6, 46) de la pale de rotor (1).

2. Pale de rotor (1) selon la revendication 1, **caractérisée en ce que** la longueur de la partie sur le côté de la racine de la pale de ledit au moins un longeron (9 - 9'") est égale à au moins 10%, en particulier à au moins 15%, en particulier à au moins 20%, de la longueur totale de ledit au moins un longeron (9 - 9‴).

3. Pale de rotor (1) selon la revendication 1 ou la revendication 2, **caractérisée en ce que** ladite au moins une section le long de l'extension longitudinale de la pale de rotor (1), dans laquelle la couche (13, 13') d'un matériau composite à fibres, dont les fibres sont orientées de manière unidirectionnelle dans le sens de l'extension longitudinale de la pale de rotor (1), s'étend d'un bord d'attaque (5, 45) à un bord de fuite (6, 46) de la pale de rotor (1), est d'au moins 10%, en particulier d'au moins 30% de la longueur de la pale de rotor (1).

4. Pale de rotor (1) selon l'une quelconque des revendications 1 à 3, **caractérisée en ce que** ladite au moins une section le long de l'extension longitudinale de la pale de rotor (1), dans laquelle la couche (13, 13') d'un matériau composite à fibres, dont les fibres sont orientées de manière unidirectionnelle dans le sens de l'extension longitudinale de la pale de rotor (1), s'étend d'un bord d'attaque (5, 45) à un bord de fuite (6, 46) de la pale de rotor (1), occupe au moins une plage de 15% à 30%, en particulier au moins 10% à 50%, en particulier au moins de 8% à 80% de la longueur de la pale de rotor (1).

5. Pale de rotor (1) selon l'une quelconque des revendications 1 à 4, **caractérisée en ce que** la coque (10, 10', 14) ou une partie de la coque de la pale de rotor comprend un noyau (11) présentant un renfoncement (12) s'étendant dans la direction de l'extension longitudinale de la pale de rotor, dans lequel ledit au moins un longeron (9 - 9'") est disposé.

6. Pale de rotor (1) selon la revendication 5, **caractérisée en ce que** le noyau (11) et ledit au moins un longeron (9 - 9‴) sont reliés avec ladite au moins une couche (13, 13') du matériau composite à fibres, dont les fibres sont orientées de manière unidirectionnelle dans le sens de l'extension longitudinale de la pale de rotor (1), qui s'étend, au moins en partie, du bord d'attaque (5, 45) au bord de fuite (6, 46) de la pale de rotor (1).

7. Pale de rotor (1) selon la revendication 5 ou la revendication 6, **caractérisée en ce que** le noyau (11) avec ledit au moins un longeron (9 - 9‴) disposé dans son renfoncement (12) est intégré dans les deux côtés de la coque en une ou plusieurs parties (10, 14).

8. Pale de rotor (1) selon l'une quelconque des revendications 1 à 7, **caractérisée en ce que** ledit au moins un longeron (9 - 9‴) est disposé sur un côté intérieur de la coque en une ou plusieurs parties (10, 10', 14).

9. Pale de rotor (1) selon la revendication 8, **caractérisée en ce que** ledit au moins un longeron (9 - 9‴) est relié avec ladite au moins une couche (13, 13') du matériau composite à fibres, dont les fibres sont orientées de manière unidirectionnelle dans le sens de l'extension longitudinale de la pale de rotor (1), qui s'étend, au moins en partie, du bord d'attaque (5, 45) au bord de fuite (6, 46) de la pale de rotor (1).

10. Installation éolienne comportant au moins une pale de rotor (1) selon l'une quelconque des revendications 1 à 9.

11. Procédé de fabrication d'une pale de rotor (1) pour une installation éolienne, qui s'étend sensiblement d'une racine de la pale de rotor (2) vers une pointe de pale de rotor (3), dans lequel une coque en une ou plusieurs parties (10, 10', 14) est fabriquée, au moins partiellement, d'un matériau composite à fibres, et dans lequel au moins un longeron (9 - 9‴) qui est agencé dans la pale de rotor (1) sensiblement dans la direction de l'extension longitudinale de la pale de rotor (1), est fabriqué de couches d'un matériau composite à fibres dont les fibres sont orientés de manière unidirectionnelle dans le sens de l'extension longitudinale de ledit au moins un longeron (9 - 9‴) et qui est assemblé avec la coque en une ou plusieurs parties (10, 10', 14), **caractérisé en ce qu'** une épaisseur de ledit au moins un longeron (9 - 9‴) est réduite vers la racine de la pale de rotor (2) dans une partie sur le côté de la racine de la pale de rotor (2), dont la longueur est au moins 3% de la longueur totale de ledit au moins un longeron (9 - 9‴), les couches (20) étant superposées de manière échelonnée les unes derrière les autres à l'extrémité côté de la racine de ledit au moins un longeron, de sorte qu'il se forme une rampe (22), ledit au moins un longeron (9 - 9‴) présentant une ou plusieurs couches de gaine (21, 21', 31, 31', 41, 41') constituées d'un matériau composite à fibres dont les fibres sont orientées de manière unidirectionnelle dans le sens de l'extension longitudinale de ledit au moins un longeron (9 - 9‴), lesdites couches de gaine recouvrant sensiblement entièrement ou partiellement une partie supérieure et / ou une partie inférieure de ledit au moins un longeron (9 - 9‴), et dans lequel la coque (10, 10', 14) est pourvue d'au moins une couche (13, 13') d'un matériau composite à fibres dont les fibres sont orientées de manière unidirectionnelle dans le sens de l'extension longitudinale de la pale de rotor (1), la couche (13, 13') s'étendant, dans au moins une section le long de l'extension longitudinale de la pale de rotor (1), d'un bord d'attaque (5, 45) à un bord de fuite (6, 46) de la pale de rotor (1).
